# EUROPEAN PATENT APPLICATION

(11) **EP 2 124 214 A1**
(43) Date of publication of application: **25.11.2009**
(21) Application number: 09159712.0
(22) Date of filing: 07.05.2009
(51) Int. Cl.: G09B 7/00

(54) **System and method for computerised digitally marking papers**

(30) Priority: 07.05.2008 NL 2001564
(71) Applicant: Oostrom, Johannes Cornelis Wilhelmus, 3402 PL Ijsselstein (NL)
(72) Inventor: Oostrom, Johannes Cornelis Wilhelmus, 3402 PL Ijsselstein (NL)
(74) Representative: Huygens, Arthur Victor

(57) **Abstract**

The invention provides a system for the automatic digital correction of exercises done on one or more answer sheets by one or more students wherein the system comprises a correction printer and a correction device functionally associated with it, whereby the correction printer is a combined device which comprises at least a scanning, sending, receiving and printing unit, and the correction device, which preferably operates with a plurality of correction printers, comprises a server, a database and, if desired, a web and/or application server. Also provided is a method for the automatic digital correction of exercises using said system.

## Description

### Field of the invention

The present invention relates to a system and method for automatic digital correction of exercises done by students. More particularly, the invention relates to the automatic digital correction of answers given in writing by students to exercises set in their lessons, as well as to the processing and storage of the correction data.

### Background

The Dutch teaching profession spends a high proportion of its non-teaching time in correcting the work of children.

This correction serves the following purposes:
- to give the students feedback on the work done
- to monitor the demands of the students
- to signal gaps in certain teaching areas
- to motivate students extrinsically
- to use group results to correct the learning process and rate.

Depending on the size of the group, the students produce a certain amount of work.

The correction of this work is generally an onerous task. This is often obviated by correcting the work altogether or correct exercise books based on random samples. Because of this state of affairs some of the objectives formulated above cannot be adequately met.

U.S. Patent No. 6,112,050, which was published in the year 2000, discloses an automatic stand-alone grading device where answer sheets of pupils, students, etc. are compared based on alphanumeric characters with a model sheet and a score is assigned. This stand-alone device comprises a scanner with which first the model sheet, then the answer sheets, are read in and are then stored electronically, a printer for printing copies of the answer sheets concerned, which have been read in by the scanner, where a limited number of extra characters, such as an "X" in the case of a wrong answer, can be printed off on the sheets. The device also comprises an error detection mechanism in which the alphanumerical characters of each of the answer sheets are compared with the characters of the model sheet and a score is assigned, which can be printed off on the answer sheets. The device also comprises a keypad for entering the point value of an error and to enter a maximum score, whereupon the score obtained from an answer sheet is calculated by the device and can be printed on the answer sheet.

Furthermore, numerous publications are known in the literature describing systems for handwriting recognition and the electronic processing of handwritten answers and texts, which as a rule include correction mechanisms; see, for example, EP 0587163, US 2005/0111735.

Although the grading device disclosed in the above U.S. Patent contributes to solving the problem outlined above, there is a need for further improvements in order to carry out the correction of exercises done by students in a cost-saving, less time-consuming manner. In addition to the correcting of exercises, there is also a need for adding a comment, particularly an educational comment. The present invention provides such a system, together with a method of utilizing this system.

### Summary of the invention

Surprisingly it has been found that the problem outlined above can be solved by the automatic digital correction of the exercises done by students on one or more answer sheets using a correction system which comprises a "correction printer" and a correction device functionally associated with it.

As used herein, the correction printer is a combined device which comprises at least a scanning, sending, receiving and printing unit, and which performs at least the following functions:
- scanning the answer sheets;
- transmitting, in digital form, the scanned answer sheets to a correction device to be corrected there;
- receiving back a digital image with correction information intended for the answer sheets; and
- printing the digital image on the original answer sheets or copies thereof.

As used herein, the correction device comprises a server for receiving digital images of the exercises done, the detection of errors in the exercises done, the making of corrections, the creation of digital images with correction information and the retransmission of said digital images to the correction printer, a database and, if desired, a web and/or application server for further processing of the data obtained.

As used herein, correction information is understood to be the total of correction characters such as lines, crosses and scrolls or flourishes, improvements and possibly a comment on the answer sheets, such as an analysis of incorrect answers, as well as a possible score for the correct or incorrect answers.

Thus, according to a first aspect of the invention a system is provided for the automatic digital correction of exercises done on one or more answer sheets by one or more students, **characterised in that** the system comprises a correction printer and a correction device functionally associated with it, the correction printer and the correction device being as defined above.

The correction printer may consist of one single unit in which at least the four above-mentioned functions are performed, or of a plurality of units, each of which performs one or more of the above-mentioned functions.

The correction device and in particular its server is connected to the correction printer by means of a data communication connection, such as the Internet, or a connection functionally equivalent to it. Therefore, it is not necessary for the correction device and correction printer to be in the same location. In a preferred embodiment, the correction device is generally in a central location, for example a data centre, removed from the correction printer, which will normally be in an educational institute such as a school. In a preferred embodiment the correction device is set up in such a way that it is suitable for operating a plurality of correction printers. Therefore, the correction device may be functionally connected to a plurality of correction printers.

The correction device is preferably equipped with a system for handwriting recognition, so that handwritten exercises can also be corrected with the system according to the invention.

According to a second aspect of the invention, a method is provided for the automatic digital correction of exercises done on one or more answer sheets by one or more students using a system which comprises a correction printer and a correction device, as defined above, each answer sheet being provided with a predetermined coding and/or formatting, which method further comprises the following steps:
a. scanning the one or more answer sheets, or a copy thereof, using the scanning unit of the correction printer, to obtain a digital image of each answer sheet;
b. transmitting the digital image(s) to a correction device using a data communication connection or a connection functionally equivalent to it;
c. loading an answer template corresponding to the answer sheets by the correction device based on the coding and/or formatting which is provided on each of the one or more answer sheets;
d. reading out and converting to digital data of the characters which are in answer positions defined by the answer template on each of the one or more answer sheets, to obtain answer data;
e. if desired, storing the answer data in a database;
f. comparing the answer data with answers defined in the answer template, to create a digital image with correction characters for each answer sheet;
g. if desired, analysing one or more incorrect answers based on an analysis type defined in the answer template, formulating a comment based on the analysis, and converting it to a digital form in the digital image;
h. if desired, determining a score and placing it in the digital image;
i. retransmitting to the correction printer the digital image(s) with correction information and any comment(s);
j. if desired, printing by the correction printer the image(s) with correction information and comment(s) on the corresponding answer sheet, or a copy thereof, mentioned in a.

Preferably, the coding and/or formatting of the answer sheets, mentioned in c. comprises a barcode or smart code.

Preferably, the answer template, mentioned in step c, is stored in a database which is functionally connected to the correction device.

According to a preferred embodiment of the invention, the answer data mentioned in step d. are stored in a database which is functionally connected to the correction device.

According to a preferred embodiment of the invention, in which the answer sheets are completed in handwriting, the handwriting is also converted during the readout process mentioned in step d. to data to be processed by a computer.

In a third aspect the invention provides a correction printer for the automatic digital correction of exercises done, as defined above, which is suitable for use in a correction system as defined above.

A fourth aspect of the invention relates to the use of the results of the method according to the invention, for example as a web application, where the data obtained can be processed into any desired form. The stored scanned images of the answer sheets can be reproduced and printed out. The scanned images of the answer sheets completed can also be reproduced and printed according to this application together with the corresponding images with correction characters.

A fifth aspect of the invention relates to a further application of the results of the method according to the invention, where one or more statistical analyses are conducted based on the answer data obtained, for example in order to measure the performances of students per class or school. Also provided is a possibility of adjusting the analysis types which are included in an answer template based on earlier results.

These and other aspects of the present invention will be described below in greater detail.

### Brief description of the drawings

Figure 1 is a schematic overview of a system for the digital correction of student answer sheets according to the invention in its various parts.
Figures 2A, 2B and 2C show, consecutively, typical examples of an image of an answer sheet of an exercise done, an image with correction characters and an exercise done with the correction information printed on it.

### Detailed description of the invention

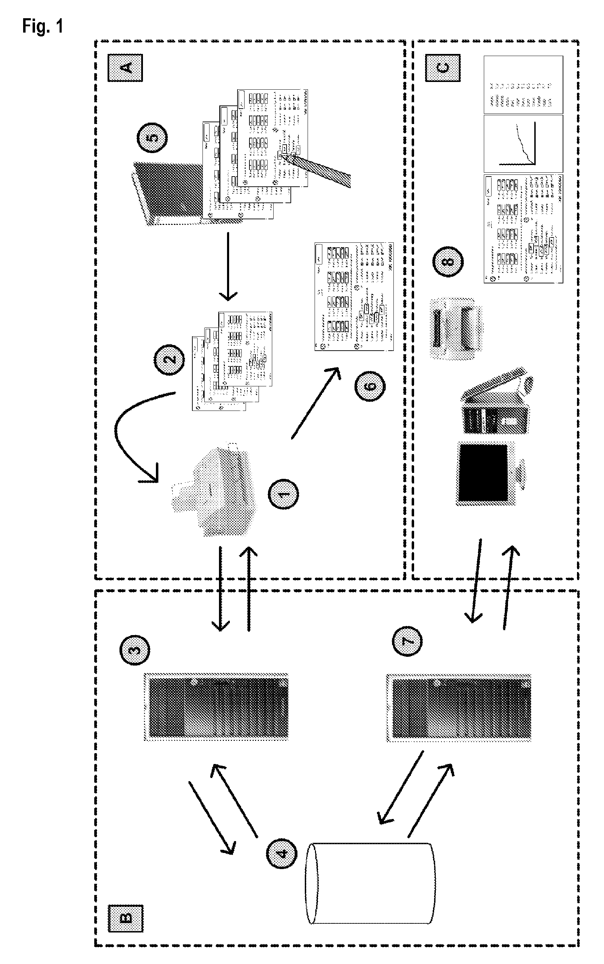

Figure 1 shows a correction system according to the invention with a correction printer 1, which is normally installed in an educational institute A, and is functionally connected, for example via a data communication device, such as the Internet, to a correction device which comprises a correction server 3 and a database 4. Correction server 3 and database 4 are installed, for example, in a data centre B which may comprise a web and/or application server 7, which is also connected functionally to database 4.

The database in the correction device may, for example, be provided with data in collaboration with publishers of calculation and counting methods. These data are required for satisfactory operation of the correction printer. For example, exercise books based on folio methods are provided with matching answer sheets 2, whereupon students can enter the answers independently when doing the exercises.

Prior to the correction process the correct entry positions and the correct answers, established in an answer template, are defined for each new answer sheet. Each answer sheet has a corresponding answer template, which therefore contains a collection of data with entry positions and correction information, and which is preferably stored beforehand in a format understood by the correction device in the database of the correction device.

In a preferred embodiment the correction device may also analyse one or more incorrect answers. The type of analysis which is conducted, for example, in a process in the correction device, is also stored in the answer template. In order to define the types it should be determined beforehand by the installers or other persons concerned, what errors can be made, what analysis can then be initiated and what comments should appear according to the result of the analysis.

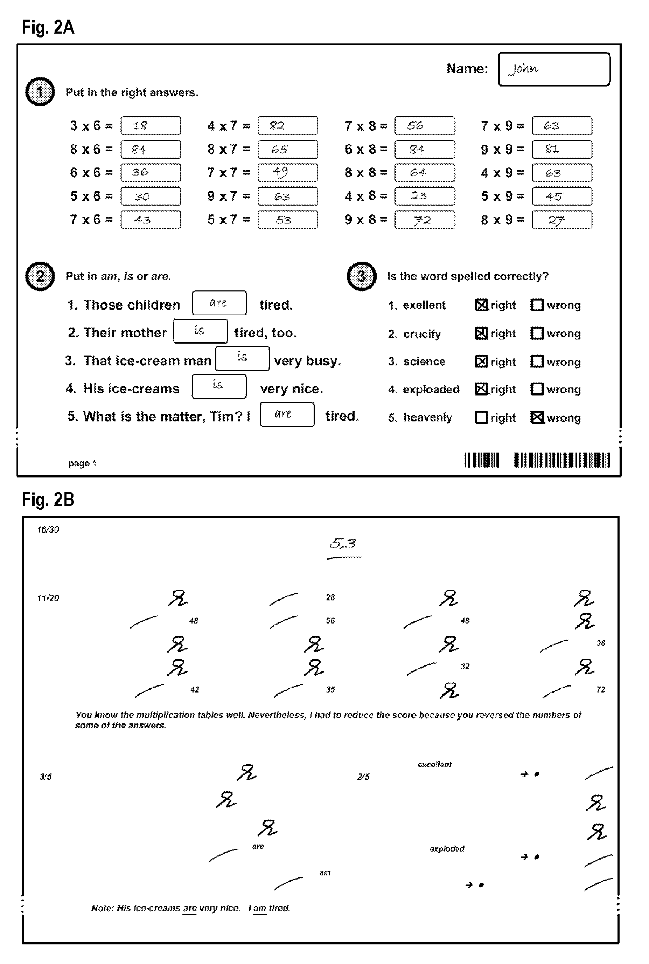

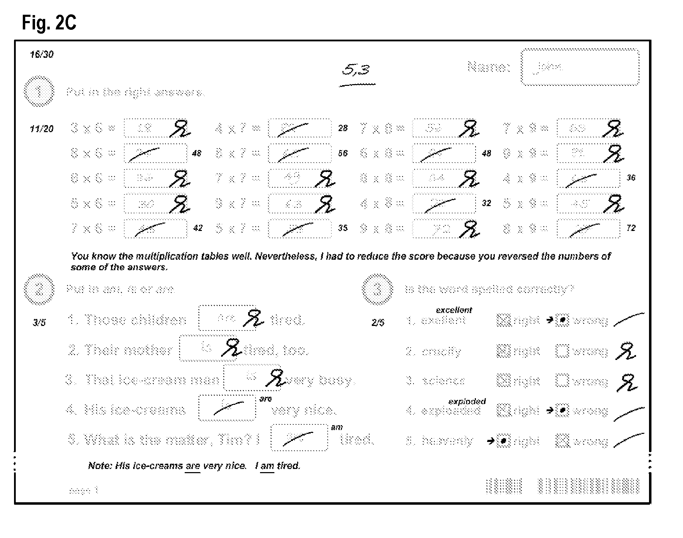

The invention will now be described in greater detail by means of a typical characterising embodiment, as represented diagrammatically in Figure 1 and in the detailed images in Figures 2A, 2B and 2C. However, the invention is not limited in any respect to this typical embodiment.

A student of an educational institution A does exercises on answer sheets 2 in a loose-leaf system. The sheets can be stored in a folder 5. The student writes the answers to the exercises in preprinted answer boxes on answer sheet 2, as further detailed in Figure 2A. The exercises are, if desired, also described more extensively in an exercise book. Answer sheets 2 are provided with a coding and/or formulation, such as a bar code or a smart code, which indicates the sheet concerned, possibly together with a suitable title and/or page number. If desired, the answer sheet may also be provided with a second unique code to identify the student. Handwriting recognition can also be used to trace the name of the student. The answer sheets are collected, for example by the responsible teachers concerned, after the exercises have been done or when the allocated time has elapsed.

Correction printer 1 preferably occupies a central position in educational institution A. At the time of installation a unique code is stored once in this correction printer, by means of which code the educational institution and/or department thereof can be identified when the scanned image is sent to the correction device. The collected answer sheets are fed into correction printer 1, for example by placing it in a feed tray (not shown separately). The sheets are scanned one by one. After the answer sheets have been scanned they are collected for the print action that will follow later. The scanned images are sent to correction server 3, for example via the Internet.

Correction server 3 is preferably installed in a data centre B, but may also be installed in any suitable place, for example in educational institution A itself, as a person skilled in the art will easily realise. Software which is capable of recognising the answers by means of handwriting recognition is installed on coding server 3. The answer sheet is corrected based on an answer template corresponding to the answer sheets. The entry positions of the answers and the possible answers are defined in the answer template. The answer templates are stored in database 4. The answers of the students are stored in database 4. Correction server 3 creates a digital correction image for each answer sheet, which image is then sent back to correction printer 1 in the educational institution. This correction image, shown in detail in Figure 2B, contains correction characters in the positions of the answers. Correction characters are understood to include, for example, red lines or crosses in the position of an incorrect answer - if desired in combination with the correct answer - and green flourishes in the position of a correct answer. Comments for the student can also be printed on the correction image based on the analysis of the answers. In these cases space is reserved for this on the answer sheet. See also Figures 2B and 2C.

Database 4 contains answer templates for correcting an answer sheet. Each answer sheet corresponds to one answer template. The correct template can be found in the database on the answer sheet based on an identification code, normally a bar code. The answers and, if desired, the results of the student are also stored in the database, so that the same sheet can be reproduced later, if necessary, results can be shown and an analysis of the answers can then be conducted.

As indicated above, the resultant correction image is sent back to correction printer 1, for example via the Internet. The correction image created by correction server 3 is printed on the previously scanned answer sheet 2, preferably in colour. The correction image is then printed on the answer sheet - and hence over the written answers - of the student, as can be seen in Figure 1, number 6, and in Figure 2C. If desired, answer sheets 2 can be copied after delivery or later, and can be stored in a safe place. In this case, the operations can be suitably carried out on copies of the answer sheets, and the correction images concerned can also be printed on the copies of the answer sheets. This alternative embodiment and any variants thereof are also included in the invention.

The student receives back the corrected answer sheet 6, and is able to examine the corrected answers and any comments made.

The teacher in the educational institution or at home, collectively denoted in Figure 1 by letter C, can go to web server 7 via a secured Internet connection, for example, in order to start a web application there. Web server 7 is functionally connected to database 4. A username and password are generally required to start the application and display the data.

A web application runs on the web and/or application server. This application can do different things, such as:
- Reproduce the answer sheet with the written answers of the student. The teacher can print these out.
- Reproduce the answer sheet with the written answers of the student and the correct image. The teacher can print these out.
- Display the results of a student: number correct, incorrect, score calculation.
- Display an analysis of the errors made
- Represent graphs of the results at student or group level

The educational learning process for one or more students can be assisted based on the results of the students in the group. Publishers can also take advantage of this correction method. They may adjust their method based on the answers and results of the students.

The teacher can access the data in the web application in any desired location and print out the overviews.

It will be clear to a person skilled in the art that modifications and adaptations to the system described in this application and the method can be applied without any deviation from the gist of the invention. Use can be made, for example, of a digital pen or drawing tablet to obtain answers from students, thereby obviating the need to scan the completed answer sheets. The correction printer may also be equipped with a device for marking an inserted answer sheet, as an extra safety measure to ensure that the correction image is printed on the correct answer sheet. Instead of correction printer 1, a so-called all-in-one printer may possibly also be used, whether or not in modified form, and if necessary combined with a computer. Moreover, the entire correction process, as described above, can in principle be housed in one single unit the functionality of the correction printer being further extended. Furthermore, a correction device may be facilitated by a plurality of correction services instead of by one correction server. This also applies to a web and/or application server. If desired, the functions of a separate correction server and a separate web and/or application server, as shown in Figure 1, may also be housed in one server.

## Claims

1. A system for the automatic digital correction of exercises done on one or more answer sheets by one or more students, **characterised in that** the system comprises a correction printer and a correction device functionally associated with it,
whereby the correction printer is a combined device which comprises a scanning, sending, receiving and printing unit, and which performs at least the following functions:
- scanning the answer sheets;
- transmitting, in digital form, the scanned answer sheets to a correction device to be corrected there;
- receiving back a digital image with correction information intended for the answer sheets; and
- printing the digital image on the original answer sheets or copies thereof;
whereby the correction device comprises a server, a database and, if desired, a web and/or application server, the server performing at least the following functions:
- receiving digital images of the exercises done;
- making corrections and creating digital images with correction information;
- retransmitting to the correction printer said digital images with correction information.

2. System according to claim 1, **characterised in that** the correction device is adapted to be functionally connected to a plurality of correction printers.

3. Correction printer, suitable for use in the system according to claim 1, **characterised in that** the correction printer is a combined device which comprises a scanning, sending, receiving and printing unit, whereby exercises done by students are scanned and digitally transmitted to a correction device to be corrected, the correction information for the exercises done by students is received back and printed on the exercises done by students, or copies thereof.

4. Correction printer according to claim 3, **characterised in that** it consists of one single apparatus, which is adapted to perform all functions defined in claim 3.

5. Correction printer according to claim 3, **characterised in** it consists of a plurality of apparatus, each of them being adapted to perform one or more functions defined in claim 3.

6. A method for the automatic digital correction of exercises done on one or more answer sheets by one or more students using a system which comprises a correction printer and a correction device, as defined above, each answer sheet being provided with a predetermined coding and/or formatting, which method further comprises the following steps:
a. scanning the one or more answer sheets, or a copy thereof, using the scanning unit of the correction printer, to obtain a digital image of each answer sheet;
b. transmitting the digital image(s) to a correction device using a data communication connection or a connection functionally equivalent to it;
c. loading an answer template corresponding to the answer sheets by the correction device based on the coding and/or formatting which is provided on each of the one or more answer sheets;
d. reading out and converting to digital data of the characters which are in answer positions defined by the answer template on each of the one or more answer sheets, to obtain answer data;
e. if desired, storing the answer data in a database;
f. comparing the answer data with answers defined in the answer template, to create a digital image with correction characters for each answer sheet;
g. if desired, analysing one or more incorrect answers based on an analysis type defined in the answer template, formulating a comment based on the analysis, and converting it to a digital form in the digital image;
h. if desired, determining a score and placing it in the digital image;
i. retransmitting to the correction printer the digital image(s) with correction information and any comment(s);
j. if desired, printing by the correction printer the image(s) with correction information and comment(s) on the corresponding answer sheet, or a copy thereof, mentioned in a.

7. Method according to claim 6, wherein the answer sheets mentioned in step c, are previously stored in the database of the correction device.

8. Method according to claim 6, wherein the coding and/or formatting of the answer sheets, mentioned in step c, is a bar code or a smart code.

9. Method according to claim 6, wherein the answers on the answer sheets are partly or entirely in handwritten form and the handwriting, mentioned in step d, is converted into computer-processable data.

10. Statistic processing of the results obtained by the method as defined in one or more of claims 6 to 9.
